Europäisches Patentamt

(19) European Patent Office

Office européen des brevets

(11) Numéro de publication: **0 039 286**

**A1**

(12) # DEMANDE DE BREVET EUROPEEN

(21) Numéro de dépôt: **81400645.8**

(22) Date de dépôt: **23.04.81**

(51) Int. Cl.³: **A 01 D 57/10**
**A 01 D 89/00**

(30) Priorité: **24.04.80 FR 8009712**

(43) Date de publication de la demande:
**04.11.81 Bulletin 81/44**

(84) Etats contractants désignés:
**AT BE CH DE FR GB IT LI NL SE**

(71) Demandeur: **Carree, Francis**
**Les Livaudières**
**F-22600 Loudeac(FR)**

(72) Inventeur: **Carree, Francis**
**Les Livaudières**
**F-22600 Loudeac(FR)**

(74) Mandataire: **Schrimpf, Robert et al,**
**Cabinet Regimbeau 26, Avenue Kléber**
**F-75116 Paris(FR)**

(54) **Machine agricole pour faner, andainer, éparpiller ou étaler.**

(57) Machine agricole pour faner, andainer, éparpiller ou étaler du fourrage ou un autre matériau végétal se trouvant au sol, comprenant en coopération, un plateau (5), un ramasseur (8,9,10,11) pour ramasser le fourrage au sol et le déposer sur le plateau, et des moyens (22) pour créer des jets d'air convenablement orientés pour chasser au sol le fourrage déposé sur le plateau par le ramasseur.

FIG_1

EP 0 039 286 A1

Machine agricole pour faner, andainer, éparpiller ou
étaler.

L'invention concerne une machine agricole
à roues,tractée, pour faner, andainer, éparpiller ou
étaler du fourrage ou un autre matériau végétal se
trouvant au sol.

On connaît différents types de faneuse-
andaineuse.

Dans ces machines connues, ce sont les
dents qui agissent par un effet de force centrifuge
relativement brutal pour éparpiller le fourrage ou
pour former des andains, en coopération avec des
écrans.

La présente invention vise à éviter
toute manipulation brutale du matériau ramassé
(fourrage, paille, roseaux, etc.) pour conserver au
maximum la qualité du fourrage.

On y parvient essentiellement, selon la
présente invention en ramassant le fourrage du sol
jusque sur un plateau et en chassant le fourrage du
plateau au sol par des jets d'air convenablement
dirigés.

Une faneuse-andaineuse conforme à la
présente invention comprend un plateau , un ramasseur
pour ramasser le fourrage au sol et le déposer sur le
plateau et des moyens pour créer des jets d'air convenablement orientés pour chasser au sol le fourrage déposé sur le plateau par le ramasseur.

Le ramasseur peut être d'un type connu en soi, utilisé notamment pour l'alimentation des presses à fourrage.

On donne la préférence aux ramasseurs qui comportent un rotor dont l'axe de rotation est disposé suivant la longueur de la machine, transversalement à la direction de déplacement de la machine. Ce rotor, entraîné en rotation sur lui-même à partir des roues de la machine ou de la prise de force du tracteur, comporte des barres longitudinales qui peuvent pivoter sur elles-mêmes pendant la rotation du rotor ; le pivotement d'une barre est commandé par exemple par une came fixe sur la machine et contre laquelle se déplace un galet relié à la barre par un levier. La barre porte une série de doigts répartis le long de la barre dans des plans verticaux perpendiculaires à la barre et la came est choisie pour que l'extrémité de chaque doigt sous l'effet de la rotation du rotor et du pivotement de la barre décrive une courbe appropriée, par exemple une courbe à peu près elliptique, en passant par des positions où le doigt ramasse du fourrage, élève le fourrage, dépose le fourrage sur le plateau, puis s'abaisse, s'escamote sous le plateau, ramasse à nouveau du fourrage, etc.

Des ramasseurs de ce type sont décrits par exemple dans le brevet français n° 1 192 976 et dans le brevet des E.U.A. n° 4 161 859.

3

On a déjà proposé d'utiliser des souffleurs dans diverses machines agricoles et l'on a même proposé d'associer des souffleurs à un dispositif de ramassage, comme décrit par exemple dans le brevet belge n° 485 672, mais ces machines ne réalisent pas la combinaison de la présente invention et ne constituent pas des faneuses-andaineuses.

On décrira ci-après une faneuse-andaineuse conforme à l'invention en référence aux figures du dessin joint sur lequel :

- la figure 1 est une coupe verticale schématique illustrant le principe général de la machine ;

- la figure 2 est une vue de dessus de la machine ;

- la figure 3 est une perspective schématique de la machine en vue de l'arrière ;

- la figure 4 est une vue longitudinale d'un doigt du ramasseur ;

- la figure 5 est une coupe verticale schématique illustrant une disposition particulière du souffleur ; et

- la figure 6 illustre en vue de dessus différentes positions des buses de soufflage de la machine.

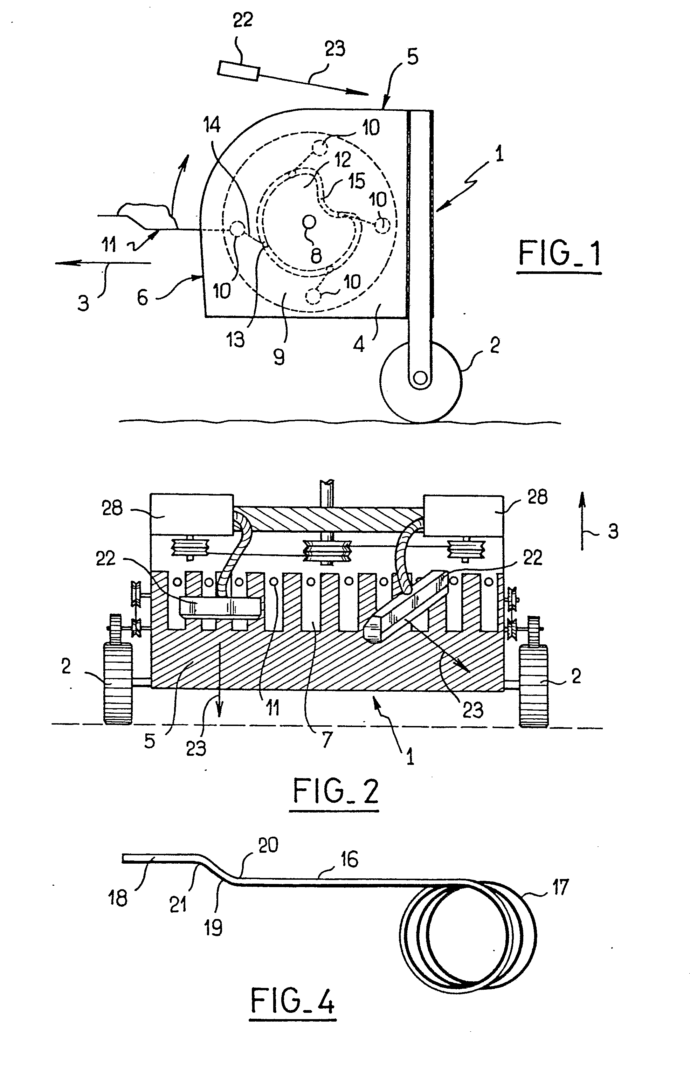

La machine (figures 1 à 3) comporte un châssis allongé 1 monté sur des roues 2 et apte à être tracté. On n'a pas représenté sur les figures le tracteur ni le dispositif qui coopère avec le système d'attelage trois points d'un tracteur pour accrocher la machine derrière le tracteur en sorte qu'elle soit disposée transversalement par rapport à la direction d'avancement 3 du tracteur.

Le châssis 1 comporte des flasques latéraux 4 reliés par un carter longitudinal ouvert au-dessous et à l'arrière. La paroi de dessus 5 du carter constitue un plateau de préférence horizontal et la paroi avant 6 du carter comporte des fentes verticales parallèles 7 qui se prolongent sur la paroi de dessus. Ces fentes sont réparties dans la longueur de la machine en sorte que le carter forme comme un peigne courbe.

A l'intérieur du carter tourne un arbre longitudinal 8 monté à rotation dans les flasques latéraux.

Cette rotation est assurée par les roues de la machine reliées à l'arbre par une transmission quelconque appropriée (non représentée) ou est assurée par une commande indépendante, par exemple à partir de la prise de force du tracteur.

L'arbre porte deux disques sur lesquels sont montées à pivotement des barres longitudinales qui portent chacune une série de doigts disposés pour passer dans lesdites fentes lorsque le rotor tourne. On n'a représenté qu'un doigt sur la figure 1.

Lorsque l'arbre tourne, chaque barre d'une part est entraînée en rotation autour de l'arbre 8 et, d'autre part, pivote sur elle-même. Ce pivotement est commandé par une came 12 fixée à l'un des flasques et contre laquelle roule un galet 13 monté à l'extrémité d'un levier 14 fixé à la barre. Le galet est maintenu en pression contre la came par un moyen quelconque approprié. Par exemple, le galet est maintenu prisonnier d'un canal 15 autour de la came.

La came est conçue pour que l'extrémité de chaque doigt décrive dans un plan vertical parallèle à la direction d'avancement de la machine, un parcours de préférence généralement elliptique au cours duquel le doigt passe à proximité du sol, ramasse le fourrage et le monte sur le plateau de la machine, le doigt s'escamotant ensuite à travers les fentes du plateau et redescendant jusqu'au sol pour ramasser à nouveau du fourrage, etc. La descente peut être verticale. Le parcours peut être autre qu'elliptique, par exemple il peut être circulaire.

L'invention n'est pas limitée à une forme particulière de parcours ; généralement, la forme du plateau est adaptée à celle du parcours des doigts pour assurer une dépose correcte sur le plateau des matières ramassées au sol par les doigts.

Selon une particularité de la présente invention, on donne de préférence au doigt une forme spéciale étudiée pour faciliter la libération du fourrage sur le plateau.

Dans cette réalisation représentée sur la figure 4, l'extrémité libre du doigt a la forme d'un Z étiré.

De fait, le doigt 11 est constitué par une tige 16 dont l'extrémité arrière ou extrémité de fixation 17 est recourbée pour former un ressort et dont l'extrémité avant 18 ou extrémité de ramassage est droite mais décalée et parallèle par rapport à la tige, cette extrémité étant raccordée à la tige par une partie intermédiaire 19 en pente montante vers l'avant. Autrement dit, le doigt supposé horizontal présente un premier coude 20 tourné vers le haut puis un second coude ou contre-coude 21 tourné vers le bas. Dans une réalisation préférée, la partie intermédiaire fait un angle de 135° environ avec la tige.

Au dessus du niveau du plateau sont disposés, selon l'invention, des buses de soufflage 22 orientées pour souffler vers l'arrière le fourrage déposé sur le plateau par les doigts. De fait, ces buses prennent le relais des doigts pour chasser le fourrage vers l'arrière (flèche 23).

Les buses sont orientables pour souffler soit en direction opposée à la direction de traction soit obliquement vers le centre ou vers le côté selon que l'on désire éparpiller ou former des andains au centre ou latéralement.

Le nombre de buses est choisi à volonté.

Dans la réalisation des figures 1 à 3, les buses de soufflage sont disposées au-dessus du plateau. Si les buses sont orientées vers le bas, le plateau constitue un écran qui évite que la poussière du sol soit soulevée par les jets d'air.

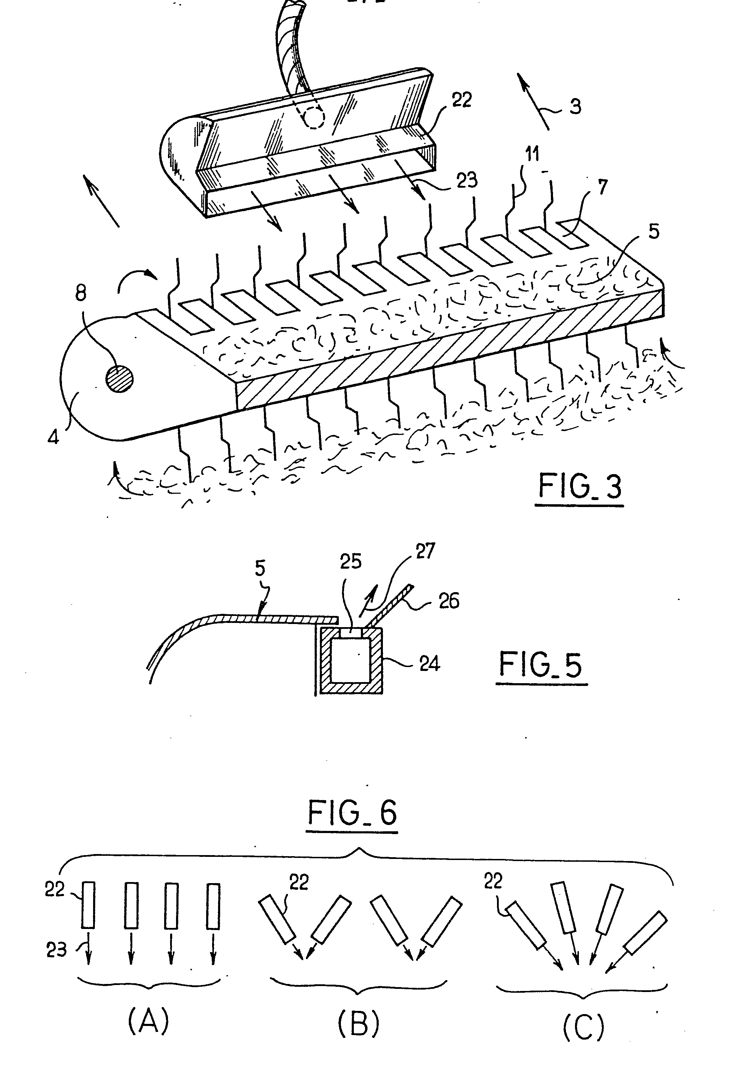

Cette disposition n'est pas limitative. Ainsi, dans une variante de réalisation représentée schématiquement sur la figure 5, les buses sont placées juste au-dessous du plateau, à proximité immédiate derrière le parcours des dents du ramasseur. Par exemple, le dispositif de soufflage est constitué par un conduit 24 qui s'étend dans la longueur de la machine qui est alimenté en air comprimé par une extrémité ou par les deux (avec éventuellement une séparation au milieu du conduit) et qui présente une fente de sortie d'air 25 située sur la paroi de dessus du conduit. Un volet longitudinal orientable 26 est articulé à l'arrière de la fente pour diriger l'air vers l'arrière de bas en haut (flèche 27). De petits déflecteurs (non visibles sur la figure 5), déplaçables et orientables , sont disposés dans la sortie d'air pour diviser le courant d'air en plusieurs jets orientés à volonté.

Cette disposition présente l'avantage que le fourrage déposé sur le plateau par le ramasseur est soulevé par l'air puis retombe au sol par son propre poids, sans tassement.

Si on le désire, le dessus de la boîte à air constitue le plateau ou une partie du plateau. Le plateau peut comporter des fentes ou des trous de passage d'air.

On comprend donc que selon l'invention les jets d'air sont toujours dirigés vers l'arrière, soit de bas en haut, soit de haut en bas, soit parallèlement à la direction d'avancement de la machine, soit obliquement vers le centre ou vers le côté.

La figure 6 illustre les positions des buses selon différents cas d'utilisation. On a supposé que la machine comporte quatre buses 22. Ces buses sont orientées pour éparpiller le fourrage (figure 6A) pour former deux andains (figure 6B) ou un gros andain central (figure 6C).

8

Ces dispositions ne sont pas limitatives.

Dans une réalisation typique, la pression d'air, créée par des ventilateurs 28 alimentés à partir de la prise de force du tracteur, est de 300 mm à la colonne d'eau, la vitesse de rotation du ramasseur est de 80 à 100 tours/minute et la vitesse d'avancement de la machine est de 10 km à l'heure. Le rendement moyen est de 1 hectare en 20 minutes.

REVENDICATIONS

1.        Machine agricole pour faner, andainer, éparpiller ou étaler du fourrage ou un autre matériau végétal se trouvant au sol, caractérisée en ce qu'elle comprend, en coopération, un plateau (5), un ramasseur (8,9,10,11) pour ramasser le fourrage au sol et le déposer sur le plateau, et des moyens (22) pour créer des jets d'air convenablement orientés pour chasser au sol le fourrage déposé sur le plateau par le ramasseur.

2.        Machine selon la revendication 1, caractérisée en ce que le ramasseur est du type en soi connu qui comprend un rotor (9) dont l'axe de rotation (8) est disposé suivant la longueur de la machine, ce rotor comportant des barres longitudinales (10) qui portent une série de doigts (11) répartis le long de la barre dans des plans verticaux perpendiculaires à la barre.

3.        Machine selon la revendication 2, caractérisée en ce que les barres (10) du rotor pivotent sur elles-mêmes pendant la rotation du rotor de façon en soi connue sous la commande d'une came (9).

4.        Machine selon la revendication 2 ou 3, caractérisée en ce que les doigts (11) passent dans des fentes d'une paroi (6) qui conduit au plateau (5).

5.        Machine selon l'une des revendications 1 à 4, caractérisée en ce que les moyens pour créer des jets d'air convenablement orientés sont des buses (22) dont les jets (23) sont orientés vers l'arrière.

6.        Machine selon la revendication 5, caractérisée en ce que les buses (22) sont orientables pour diriger les jets d'air (23), à volonté, vers le haut ou vers le bas, droit vers l'arrière ou obliquement vers l'arrière.

7. Machine selon la revendication 6,
caractérisée en ce que les buses (22) sont disposées
au-dessus du plateau (5).

8. Machine selon la revendication 6,
caractérisée en ce que les buses (22) sont disposées
au-dessous et à l'arrière du plateau (5).

9. Machine selon l'une des revendications
1 à 8, caractérisée en ce que les doigts (11) sont des
tiges dont l'extrémité de ramassage a la forme d'un Z
étiré, de façon à former un coude (20) et un contre-
coude (21).

FIG_1

FIG_2

FIG_4

FIG_3

FIG_5

FIG_6

(A)          (B)          (C)

**Office européen des brevets**

## RAPPORT DE RECHERCHE EUROPEENNE

EP 81 40 0645

<table>
<tr><td colspan="3" align="center"><strong>DOCUMENTS CONSIDERES COMME PERTINENTS</strong></td><td colspan="2"><strong>CLASSEMENT DE LA DEMANDE (Int. Cl.³)</strong></td></tr>
<tr><td>Catégorie</td><td colspan="2">Citation du document avec indication, en cas de besoin, des parties pertinentes</td><td>Revendication concernée</td><td rowspan="9">A 01 D 57/10<br>A 01 D 89/00</td></tr>
<tr><td>X/D</td><td colspan="2">BE - A - 485 672 (THWAITES)<br><br>* Page 3, ligne 20 à page 5 *<br>---</td><td>1,4</td></tr>
<tr><td></td><td colspan="2">BE - A - 688 723 (VANDENABEELE)<br><br>* Page 3, lignes 11-21; revendications 3-6; figure 7 *<br>---</td><td>2-4</td></tr>
<tr><td></td><td colspan="2">GB - A - 617 984 (DEHN)<br><br>* Page 2, ligne 120 à page 3, ligne 19 *<br>---</td><td>2-4</td></tr>
</table>

**DOMAINES TECHNIQUES RECHERCHES (Int. Cl.³)**

A 01 D

<table>
<tr><td>D</td><td>US - A - 4 161 859 (STORM)<br><br>* Colonne 2, ligne 52 à colonne 3, ligne 10 *<br>---</td><td>1-4,9</td></tr>
<tr><td>D</td><td>FR - A - 1 192 976 (ROUSSEAU)<br><br>* Page 2, colonne de gauche, avant-dernier paragraphe à page 2, colonne de droite, paragraphe 1 *<br>---</td><td>2-4</td></tr>
<tr><td>A</td><td>DE - C - 459 234 (ENNEKING)<br><br>* Revendications *<br>---</td><td>1</td></tr>
<tr><td>A</td><td>FR - A - 2 202 634 (SCHMIDT)<br><br>* Revendications *<br>---</td><td>1</td></tr>
<tr><td>A</td><td>US - A - 3 898 786 (LUNDAAL)<br><br>* Revendication 1 *<br>---------</td><td>1</td></tr>
</table>

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 23.07.1981 | DE LAMEILLEURE |

OEB Form 1503.1 06.78